# EUROPÄISCHE PATENTSCHRIFT

(11) **EP 0 792 439 B1**
(45) Veröffentlichungstag und Bekanntmachung des Hinweises auf die Patenterteilung: **22.08.2001**
(21) Anmeldenummer: 96934463.9
(22) Anmeldetag: 16.09.1996
(51) Int. Cl.: G01D 1/00, G01D 1/14

(54) **VERFAHREN UND EINRICHTUNG ZUR ERFASSUNG UND AUSWERTUNG VON AUF BESTIMMTE PHYSIKALISCHE VORGÄNGE ZURÜCKZUFÜHRENDEN SIGNALVERLÄUFEN**
METHOD AND MEANS FOR DETECTING AND EVALUATING SIGNAL PATTERNS TRACEABLE TO PARTICULAR PHYSICAL PROCESSES
PROCEDE ET DISPOSITIF DE DETECTION ET D'EVALUATION DE TRACES DE SIGNAL IMPUTABLES A DES PROCESSUS PHYSIQUES PARTICULIERS

(30) Priorität: 16.09.1995 EP 95114612
(43) Veröffentlichungstag der Anmeldung: 03.09.1997
(73) Patentinhaber: ALCATEL, 75008 Paris (FR)
(72) Erfinder: FEHRENBACH, Hermann, D-76761 Rülzheim (DE)
(74) Vertreter: Knecht, Ulrich Karl, Dipl.-Ing.
(86) Internationale Anmeldenummer: EP9604047
(87) Internationale Veröffentlichungsnummer: WO9710489

(56) Entgegenhaltungen:
- EP-A- 0 385 102
- DE-A- 4 142 419
- DE-A- 4 228 934
- SIGNAL + DRAHT, Bd. 77, Nr. 4, 1985, Seiten 72-77, XP002023056 G. HOFFMANN U. H. UEBEL: "Neue Zählpunkte (Zp 30) für Achszähler" in der Anmeldung erwähnt

## Beschreibung

Die Erfindung betrifft ein Verfahren gemäß dem Oberbegriff des Patentanspruchs 1. Ein derartiges Verfahren ist dann durchzuführen, wenn Signale, z. B. Sensor-Ausgangssignale, nicht nur durch solche physikalischen Vorgänge hervorgerufen werden, deren Erfassung erwünscht ist, sondern auch von Vorgängen oder Einflüssen, die nicht erfasst werden sollen, und die somit als Störungen erkannt und eliminiert werden müssen.

Manchmal tritt auch das Problem auf, dass unterschiedliche Beeinflussungen eines Sensors erfasst, aber in ihrer Art voneinander unterschieden werden sollen.

Das zuerst genannte Problem tritt z. B. bei der Zählung von Eisenbahnachsen mit Hilfe von sogenannten elektromagnetischen Schienenkontakten auf, das zuletzt genannte Problem z. B. bei der Zählung von Straßenfahrzeugen mit Hilfe von Induktionsschleifen, wenn dabei verschiedene Fahrzeugarten (PkW, LkW) getrennt erfasst werden sollen.

Schienenkontakte für Achszähleinrichtungen und ihre Arbeitsweise sind z. B. in einem Aufsatz von G. Hoffmann und H. Uebel in "Signal & Draht" 77 (1985), Heft 4 auf Seite 72-77 beschrieben. Induktionsschleifen zur Fahrzeugerfassung sind zur Steuerung von Verkehrssignalanlagen verbreitet im Einsatz.

Beim Schienenkontakt erzeugt ein an der Außenseite einer Schiene befestigter Sendekopf ein magnetisches Wechselfeld, das von einer Empfangsspule in einem an der Innenseite der Schiene, dem Sendekopf gegenüber befestigten Empfangskopf aufgenommen und in ein elektrisches Ausgangssignal umgesetzt wird. Ein durchgehendes Rad verändert das magnetische Wechselfeld und erzeugt eine Amplitudenschwächung, eine sogenannte Radabsenkung, die, wie in dem oben genannten Aufsatz beschriebenen Fall, noch mit einer Phasenumkehr des Trägers des Ausgangssignals einhergehen kann. Diese Radabsenkung wird mit einem vorgegebenen Schwellenwert verglichen und, falls sie diesen unterschreitet, als Achsdurchgang gewertet und einer Gleisfreimeldeeinrichtung zugeführt.

Die heute eingesetzten Schienenkontakle sind durch elektromagnetische Einstreuungen störbar. Moderne Schienenfahrzeuge tragen zunehmend Magnetschienenbremsen oder Wirbelstrombremsen, die mit ihren starken magnetischen Streufeldern Schienenkontakte so beeinflussen können, dass diese fehlerhafterweise durchgehende Achsen melden. In Schienennähe befindliche oder dorthin absenkbare ferromagnetische Massen an Fahrzeugen, wie z. B. Wirbelstrombremsen, können zudem, auch ohne aktiviert zu sein, das Magnetfeld eines Schienenkontaktes verändern und so fälschlicherweise die Abgabe eines Achszählimpulses auslösen. Derartige Störungen führen letztlich dazu, dass ein Gleisabschnitt, der an sich freigefahren ist, besetzt gemeldet bleibt und den weiteren Fahrbetrieb behindert.

Ein Verstellen des Schwellenwertes, mit dem die Radabsenkungen verglichen werden, ändert zwar die Empfindlichkeit des Schienenkontaktes, ist aber zur Unterdrückung der beschriebenen Störungen nicht geeignet, da diese Störungen einerseits in ihrer Amplitude durchaus die Größe von zu erfassenden Radabsenkungen erreichen können und andererseits der Schwellenwert nur geringfügig geändert werden darf, damit sichergestellt bleibt, dass alle Radabsenkungen, die infolge unterschiedlicher Radgrößen und unterschiedlicher Durchgangsgeschwindigkeiten in Amplitude und Zeitdauer stark variieren, sicher erfasst werden.

Für die Erfassung von über eine Induktionsschleife fahrenden Straßenfahrzeugen gilt prinzipiell dasselbe. Ein durch ein zu erfassendes Fahrzeug bestimmter Art verursachter Signalverlauf muss von Störungen und von durch Fahrzeuge anderer Art hervorgerufenen Signalen unterschieden werden können, was durch eine einfache Amplitudenbewertung und die Erfassung der Einwirkungsdauer nicht gewährleistet ist.

Aufgabe der Erfindung ist deshalb, ein Verfahren anzugeben, mit dem Signalverläufe den sie auslösenden physikalischen Vorgängen mit hoher Sicherheit zugeordnet und Störsignale sicher ausgeschieden werden können.

Die Aufgabe der Erfindung wird durch die im Anspruch 1 angegebenen Merkmale gelöst.

Durch die Annäherung des Signalverlaufes durch eine definierte, den Signalverlauf bei Ablauf eines bestimmten physikalischen Vorganges erfahrungsgemäß gut wiedergebende mathematische Funktion, z. B. eine Parabel 2. oder 3. Ordnung, wird die Möglichkeit geschaffen, die Form des Signalverlaufs zu erfassen und als Kriterium dafür zu benutzen, dass ein bestimmter zu erwartender physikalischer Vorgang - im Falle des Schienenkontaktes z. B. ein Raddurchgang - stattgefunden hat, und die erfasste Signaländerung keinem anderen physikalischen Vorgang, etwa einer Beeinflussung des Schienenkontaktes durch das Magnetfeld einer Wirbelstrombremse, oder einer anderweitigen Störung zuzuschreiben ist.

Im Falle von über eine Induktionsschleife fahrenden Straßenfahrzeugen kann mittels des Verfahrens nach der Erfindung ein durch ein Fahrzeug bestimmter Art verursachter Signalverlauf durch die Erfassung und Bewertung seiner Form von Signalverläufen, die durch Fahrzeuge anderer Art oder beliebige Störungen verursacht werden, unterschieden werden.

Hierbei sind Verfahren zur Annäherung von Messkurven durch mathematische Funktionen (sogenanntes curve-fitting) für sich bekannt. Siehe hierzu z. B. Programmesammlung William H. Press et al. "Numerical Recipes in C", erschienen 1988 bei Cambridge University Press, published by the Press Syndicate of the University of Cambridge. The Pitt Building, Trumpington Street, Cambridge CB21RP, GB, Seiten 528-535.

Nachdem lineare Veränderungen des Signalverlaufs, etwa eine durch höhere Verstärkung hervorgerufene höhere Signalamplitude oder eine durch niedrigere Ablaufgeschwindigkeit des physikalischen Vorganges bedingte Dehnung des Signalverlaufes über der Zeitachse bei der Bildung des Kreuzkorrelationskoeffizienten zwischen Signalverlauf und angenäherter Parabel nicht in Erscheinung treten, kann bei dieser Korrelation immer in etwa derselbe Kreuzkorrelationskoeffizient als Ergebnis erwartet werden. Ein Kreuzkorrelationskoeffizient, deutlich niedriger als der zu erwartende Wert, sagt dann aus, dass nicht der zu erfassende physikalische Vorgang - z. B. der Durchgang eines Rades durch das Magnetfeld eines Schienenkontaktes - sondern ein anderer Vorgang stattgefunden hat, oder dass überhaupt nur eine Störung aufgrund elektromagnetischer Einstreuung aufgetreten ist.

Ausgestaltungen des Verfahrens nach der Erfindung sind den Ansprüchen 2 bis 7 zu entnehmen.

Hier betrifft Anspruch 2 eine Ausgestaltung, die geeignet ist, mehrere mögliche Signalverläufe unterschiedlichen physikalischen Vorgängen selektiv zuzuordnen. So können z. B. über eine in der Straßendecke verlegte Induktionsschleife hinwegfahrende Fahrzeuge nach Größe und Form unterschieden und getrennt erfasst werden, so dass Zählergebnisse für LkW, Pkw und Zweiräder mit einem einzigen Sensor und dennoch getrennt voneinander gewonnen werden können.

Das erfindungsgemäße Verfahren kann aber auch in ganz anderen technischen Bereichen Anwendung finden, z. B. in der Sicherungstechnik, wo, um Fehlalarme zu vermeiden, die bei Eindringen eines Menschen in einen gesicherten Bereich entstehenden elektrischen, akustischen oder optischen Signale von Signalen, die durch Wind und Wetter oder durch Tiere verursacht werden, unterschieden werden müssen, oder in Bereichen, wo z. B. akustische Signale auf Schäden an mechanischen Teilen (z. B. Lagerschäden) hinweisen können, oder, wie beim Klopfen eines Verbrennungsmotors, eine falsche Einstellung von Betriebsparametern verraten.

Gegenstand der Ansprüche 3 und 4 sind verschiedene, zur Annäherung an häufiger vorkommende Signalverläufe geeignete mathematische Funktionen.

Eine in Anspruch 5 beschriebene Weiterbildung des Verfahrens nach der Erfindung sieht die Auswertung der an die Signalverläufe jeweils optimal angepassten mathematischen Funktionen zur Bestimmung der Signalmaxima, oder -minima, der zeitlichen Mittelpunkte oder anderer Bezugspunkte in den Signalverläufen, die bestimmten Stadien der zugeordneten physikalischen Vorgänge entsprechen, vor. Die zeitliche Mitte eines Signalverlaufes kann dann unmittelbar numerisch der dem Signalverlauf angenäherten Funktion entnommen werden.

Die Ansprüche 6 und 7 betreffen Verwendungen des Verfahrens nach der Erfindung.

Anhand von 4 Figuren sollen nun Ausführungsbeispiele des Verfahrens nach der Erfindung beschrieben werden.

Die Figuren zeigen im einzelnen:
- Fig. 1: Den Signalverlauf an einem elektromagnetischen Schienenkontakt bei Durchfahrt eines Drehgestells ohne und mit Wirbelstrombremse.
- Fig. 2: Ein Blockschaltbild einer Einrichtung zur Durchführung des Verfahrens.
- Fig. 3: verschiedene Signalverläufe und deren Annäherung durch eine mathematische Funktion.
- Fig. 4: Korrelationsergebnisse, die unterschiedliche Beeinflussungen wiedergeben.

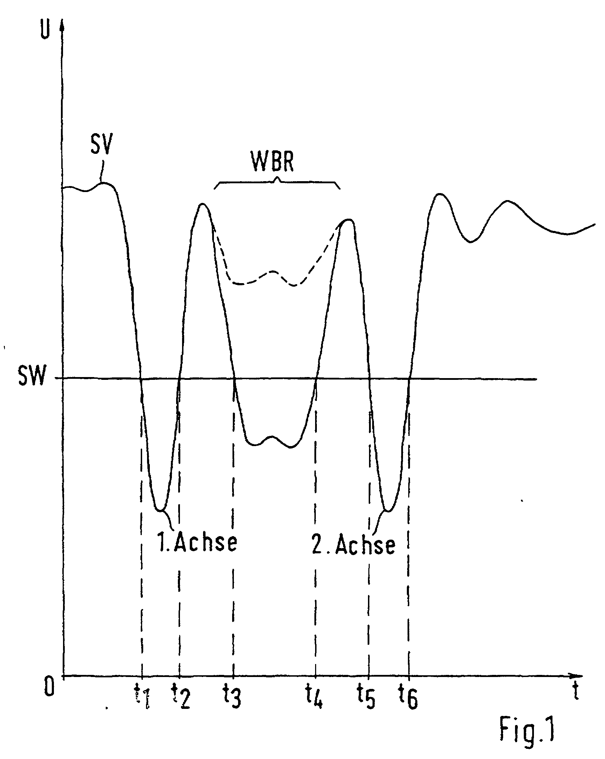

In Fig. 1 ist die Amplitude U des Ausgangssignals eines elektromagnetischen Schienenkontaktes über der Zeit (Signalverlauf SV) während der Durchfahrt eines Drehgestells eines Eisenbahnwagens aufgetragen. Die durchbrochene Linie im mittleren Bereich WBR des Signalverlaufs SV zeigt dabei den Signalverlauf bei Durchfahrt eines Drehgestells, das keine Wirbelstrombremse besitzt an, diedurchgezogene Linie in diesem Bereich gibt den Signalverlauf bei Durchfahrt eines Drehgestells mit zwischen beiden Rädem angeordneter Wirbelstrombremse wieder. Zur Auswertung erfaßt wird die sogenannte Radabsenkung, der Anteil des Signalverlaufs der mit Unterschreiten einer Schwelle SW durch die Signalamplitude im Zeitpunkt t₁ für die erste Achse und im Zeitpunkt t₅ für die zweite Achse beginnt und mit dem Wiedererreichen der Schwelle im Zeitpunkt t₂ bzw. t₆ endet. Die in Fig. 1 dargestellten Radabsenkungen sind wirklichen Raddurchgängen zugeordnet, die somit erkannt und weiterverarbeitet werden können.

in Fig. 1 ist jedoch noch eine weitere Signalabsenkung unter die Schwelle SW wiedergegeben. Diese beginnt im Zeitpunkt t₃ und endet im Zeitpunkt t₄. Sie tritt nur bei Drehgestellen mit Wirbelstrombremse auf, besitzt - hier ohne weiteres erkennbar - eine von einer Radabsenkung abweichende Form und wird von der auf geringe Höhe über der Schiene abgesenkten Wirbelstrombremse verursacht. Diese Absenkung darf nicht als Radabsenkung registriert werden, da mit ihr kein Raddurchgang verbunden ist. Würde sie, z.B. bei Einfahrt in einen Gleisabschnitt, als Raddurchgang gezählt und bei Ausfahrt aus dem Gleisabschnitt infolge inzwischen angehobener Wirbelstrombremse nicht mehr auftreten, so würde der Gleisabschnitt nicht freigemeldet und könnte erst nach umständlicher Überprüfung wieder für Zugfahrten freigegeben werden.

Um die von der Wirbelstrombremse und eventuellen anderweitigen Störungen verursachten Absenkungen von echten Radabsenkungen unterscheiden zu können, werden alle auftretenden Radabsenkungen in digitaler Form gespeichert und einer Rechenoperation unterworfen, in der ihre Ähnlichkeit mit bekannten, den einzelnen physikalischenVorgängen (Raddurchgang, Beeinflussung durch Wirbelstrombremse etc.) zupeordneten Signalverläufen ermittelt und bewertet wird.

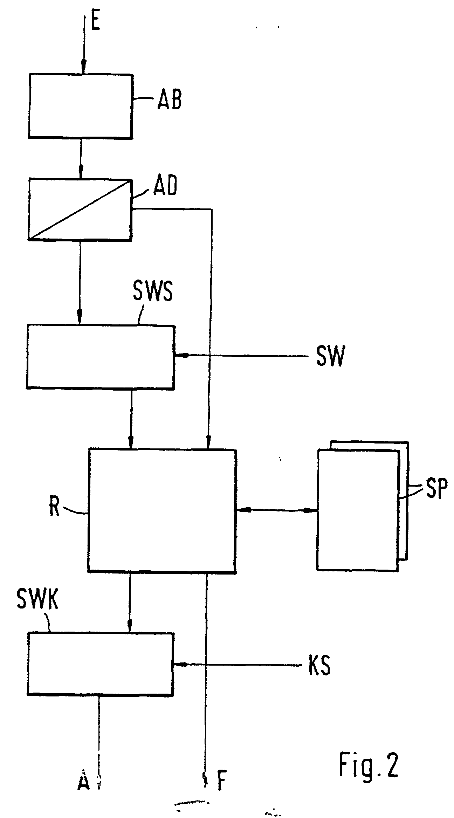

Fig. 2 zeigt schematisch ein Blockschaltbild der hierzu erforderlichen Einrichtung:

Das Ausgangssignal des hier nicht dargestellten elektromagnetischen Schienenkontaktes wird über einen Eingang E, eine Anpassungsschaltung AB und einen A/D-Wandler AD einer Schwellenwertschaltung SWS zugefá•áhrt. Diese ist, wie in der Figur dargestellt, einem Rechner R vorgeschaltet oder ist Teil dieses Rechners und vergleicht den Verlauf der digitalisierten Signalamplitude mit einer im Rechner oder einem gesonderten Speicher abgespeicherten Schwelle SW. Bei Unterschreiten der Schwelle gibt die Schwellenwertschaltung ein erstes Triggersignal an den Rechner R aus, das eine Zeitmessung startet und den Rechner zur Speicherung des Signalverlaufes veranlaßt, bis ein zweites Triggersignal bei Wiedererreichen der Schwelle die Speicherung beendet. Jeder unterhalb der Schwelle verlaufende Teil des Signalverlaufes wird somit als eine Folge von Abtastwerten über der Zeit gespeichert, wobei als zeitlicher Bezugspunkt der Zeitpunkt des Unterschreitens der Schwelle dient.

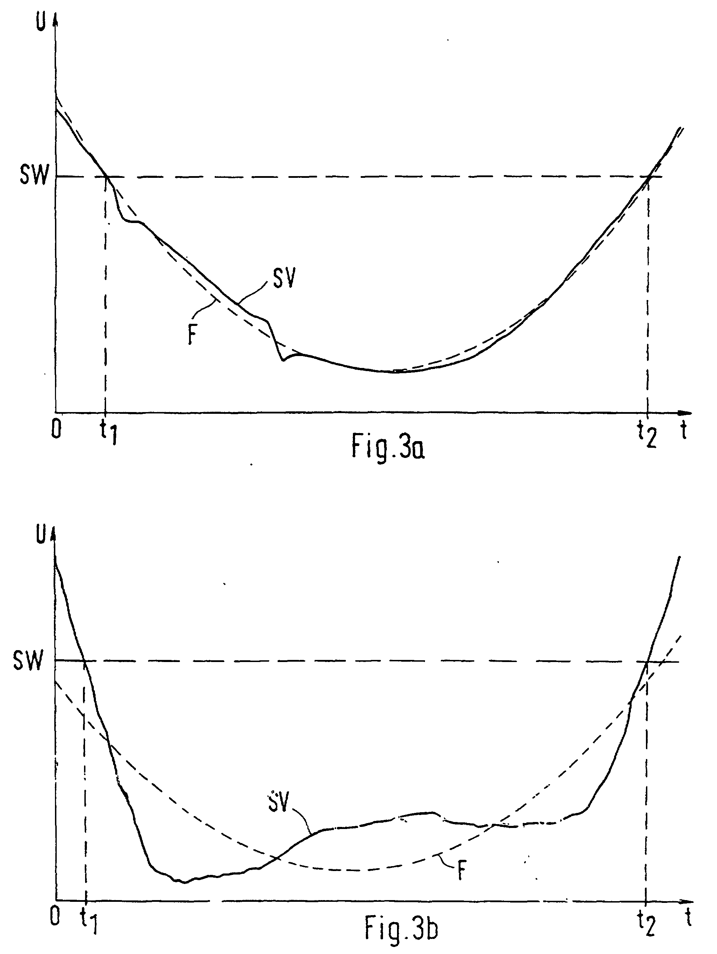

Im Rechner R oder den ihm zugeordneten Speichern SP sind nun eine Reihe von mathematischen Funktionen gespeichert, von denen bekannt ist, daß sie sich zur Beschreibung von durch bestimmte physikalische Vorgänge verursachten Signalverläufen eignen. So eignen sich erfahrungsgemäß quadratische oder kubische Parabeln zur Beschreibung von echten Radabsenkungen. Der Rechner wird deshalb nach einem bekannten, ebenfalls abgespeicherten Programm (sog. curve fitting-Programm) eine derartige Parabel, d. h. deren Koeffizienten so lange ändern, bis die zwischen der Parabel und der Signalverlaufskurve eingeschlossene Fläche ein Minimum wird. Beispielhafte Ergebnisse einer solchen Rechnung sind Fig. 3 zu entnehmen: Hier zeigt z. B. Fig. 3a den Signalverlauf SB einer Radabsenkung an einem elektromagnetischen Schienenkontakt, die recht gut durch eine Ausgleichsparabel F angenähert werden konnte. Fig. 3b zeigt einen Signalverlauf an demselben Schienenkontakt, dem eine zur Beschreibung eines Raddurchganges geeignete Parabel (Funktion F) nur schlecht angenähert werden konnte und der dadurch als nicht zu einem Raddurchgang gehörend erkannt wird.

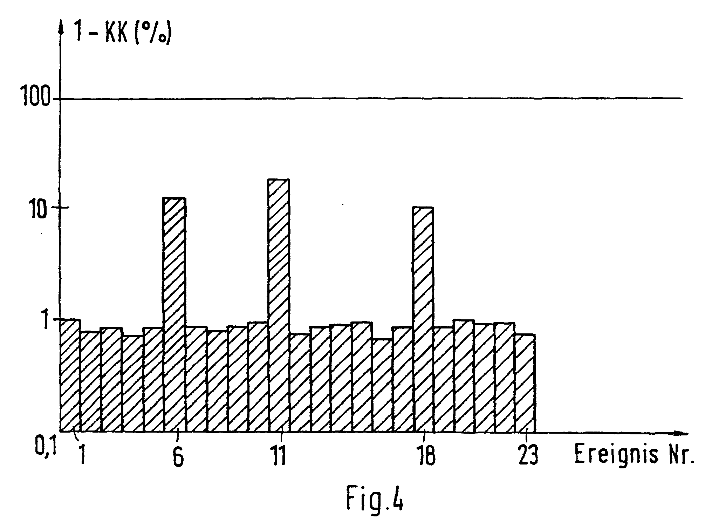

Um die Annäherung objektiv bewerten zu können, wird als Maß für die Ähnlichkeit der Kreuzkorrelationskoeffizient zwischen Signalverlauf und optimal angenäherter Funktion (Parabel) vom Rechner ermittelt. Besitzt dieser einen Wert nahe 1 (100%), so entspricht die angenäherte Parabel dem Signalverlauf sehr weitgehend. Mit zunehmender Unähnlichkeit zwischen Parabel und Signalverlauf nimmt der Kreuzkorrelationskoeffizient ab. Für Fig. 3a beträgt der Kreuzkorrelationskoeffizient z. B. 99,6%, für Fig. 3b nur noch 81,9%. Legt man einen zwischen beiden Werten liegenden Kreuzkorreiations-Sollwert fest (z. B. 95%), so kann man, diesen als Schwellenwert benutzend, mittels eines Schwellenwertvergleichs der Kreuzkorrelationskoeffizienten ein Kriterium dafür gewinnen, daß ein Raddurchgang stattgefunden hat. Störungen und Beeinflussungen durch Wirbelstrombremsen (Fig. 3b) oder Magnetschienenbremsen führen zu Kreuzkorrelationkoeffizienten, die weit unter dem Sollwert liegen und aufgrunddessen von der Zählung der Radimpulse ausgenommen werden können. In Fig. 4 ist in einem Diagramm mit logarithmischer Teilung der Ordinate die Differenz zwischen dem ermittelten Kreuzkorrelationskoeffizienten und dem für maximale Ähnlichkeit erhältlichen Wert 1 für eine Zugfahrt mit abgesenkter, aber nicht aktivierter Wirbelstrombremse aufgetragen. Im Diagramm ist klar zu erkennen, mit welcher Deutlichkeit hier zwischen Radabsenkung und Störung (Ereignisse 6, 11, 18) unterschieden werden kann. Für Fahrten mit aktivierter Wirbelstrombremse treten die Unterschiede zwischen Radabsenkung und Störung durch die Wirbelstrombremse noch deutlicher als in Fig. 4 zutage.

Die Berechnung der Kreuzkorrelationskoeffizienten zwischen tatsächlichem und angenähertem Signalverlauf und deren Vergleich mit einem abgespeicherten Kreuzkorrelations-Sollwert hat, wie schon eingangs erwähnt, den Vorteil, daß lineare Änderungen in der Amplitude und der Breite des gesamten aufgezeichneten Signalverlaufes, wie sie durch unterschiedliche Geschwindigkeit des Raddurchgangs und unterschiedliche Radgrößen hervorgerufen werden, nicht besonders berücksichtigt zu werden brauchen, da sie in den Kreuzkorrelationskoeffizienten nicht eingehen. Es werden also nur die Signatur des Signalverlaufs, nicht aber seine Skalierungswerte zur Auswertung herangezogen.

Es kann somit dem Rechner in Fig. 2 eine weitere Schwellenwertschaltung SWK nachgeschaltet werden, der der ermittelte Kreuzkorrelationskoeffizient und der abgespeicherte Kreuzkorrelations-Sollwert zugeführt werden und deren Ausgang A dann das Signal "erkannter Raddurchgang" entnommen werden kann.

Die angenäherte Funktion steht im Rechner zur Verfügung. Es können deshalb über einen Ausgang F einzelne Werte dieser Funktion anstelle von entsprechenden Werten des Signalverlaufes aus dem Rechner abgerufen werden. Dies gilt insbesondere für die Mitte des aufgezeichneten Signalverlaufes, der z. B. der Lage des Scheitelpunktes einer angenäherten Parabel entspricht, aber auch für Beginn und Ende des Signalverlaufes. Da kurzzeitige Störungen und örtliche Unsymmetrien eine angenäherte Parabel viel weniger beeinflussen als den Signalverlauf selbst, lassen sich die genannten Punkte mit großer Genauigkeit festlegen.

Das vorstehend für elektromagnetische Schienenkontakte beschriebene Verfahren einschließlich der zur Durchführung vorgeschlagenen Einrichtung läßt sich auf vielen anderen, wie z. B. den genannten Anwendungsgebieten vom jeweiligen Fachmann leicht realisieren. Dies gilt insbesondere für Anwendungen, bei denen unmittelbar elektrische Ausgangssignale auszuwerten sind. Mit dem Einsatz entsprechender Wandler lassen sich jedoch auch optische oder akustische Signale auswerten.

Der beim vorstehend beschriebenen Ausführungsbeispiel nach der Digitalisierung des Signalverlaufes vorgenommene Schwellwertvergleich kann dabei selbstverständlich auch bereits vor der Digitalisierung in einer analog arbeitenden Schaltung stattfinden.

## Patentansprüche

1. Verfahren zur Erfassung und Auswertung des zeitlichen Verlaufs (SV) eines Signals, insbesondere eines Ausgangssignals eines Sensors, und zur Zuordnung dieses Signalverlaufs zu einem bestimmten, diesen Signalverlauf hervorrufenden physikalischen Vorgang,
**dadurch gekennzeichnet** , dass das Signal in elektrischer Form digitalisiert, mit einem Schwellenwert (SW) verglichen und sein Verlauf in Bereichen, in denen seine Amplitude eine vorgegebene Lage oberhalb oder unterhalb in bezug auf den Schwellenwert (SW) einnimmt, aufgezeichnet wird, dass aufgezeichnete Signalverläufe jeweils einer Rechenoperation unterworfen werden, in der sie durch eine zur Beschreibung des durch den bestimmten physikalischen Vorgang hervorgerufenen Signalverlaufs geeignete mathematische Funktion optimal angenähert werden, dass dabei oder daran anschließend der Kreuzkorrelationskoeffizient zwischen dem aufgezeichneten Signalverlauf und der optimal angenäherten mathematischen Funktion ermittelt und mit einem vorgegebenen, für den physikalischen Vorgang und die zur Beschreibung des von diesem hervorgerufenen Signalverlaufes geeignete mathematische Funktion charakteristischen Kreuzkorrelations-Sollwert verglichen wird und dass, sofern der ermittelte Kreuzkorrelationskoeffizient in seinem Betrag größer als dieser Sollwert ist, angenommen wird, dass der bestimmte physikalische Vorgang stattgefunden hat.

2. Verfahren nach Anspruch 1, dadurch gekennzeichnet, dass die Rechenoperation nacheinander die Annäherung mehrerer mathematischer Funktionen an einen Signalverlauf vorsieht, die zur Beschreibung von Signalverläufen, die von jeweils unterschiedlichen physikalischen Vorgängen hervorgerufen werden, geeignet sind, und dass die Ermittlung des Kreuzkorrelationskoeffizienten und dessen Vergleich mit einem charakteristischen Kreuzkorrelations-Sollwert für jede der mathematischen Funktionen erfolgt und im Falle, dass ein ermittelter Kreuzkorrelationskoeffizient im Betrag größer als ein Kreuzkorrelations-Sollwert ist, angenommen wird, dass ein der jeweiligen, dem Signalverlauf optimal angenäherten mathematischen Funktion und dem für diese charakteristischen Kreuzkorrelations-Sollwert zugeordneter physikalischer Vorgang stattgefunden hat.

3. Verfahren nach Anspruch 1 oder 2, dadurch gekennzeichnet, dass als mathematische Funktionen zur Annäherung an einen Signalverlauf, Kegelschnitte, insbesondere Parabeln 2. und 3. Ordnung vorgesehen sind.

4. Verfahren nach Anspruch 1 oder 2, dadurch gekennzeichnet, dass als mathematische Funktionen zur Annäherung an einen Signalverlauf Exponentialfunktionen, Trigonometrische Funktionen oder andere, zumindest in Teilbereichen stetige und eindeutige Funktionen vorgesehen sind.

5. Verfahren nach einem der vorstehenden Ansprüche, dadurch gekennzeichnet, dass in einem weiteren Verfahrensschritt die an einen physikalischen Vorgang optimal angenäherte Funktion hinsichtlich Höhe und Lage ihres Maximums oder Minimums, hinsichtlich ihrer Breite oder hinsichtlich der Lage vorgegebener Werte ausgewertet wird.

6. Verfahren nach einem der vorstehenden Ansprüche, dadurch gekennzeichnet, dass eine Erfassung von Raddurchgängen an einem elektromagnetischen Schienenkontakt durchgeführt wird.

7. Verfahren nach einem der Ansprüche 1 bis 5 dadurch gekennzeichnet, dass eine Erfassung von Straßenfahrzeugen mit Hilfe einer in der Straßendecke verlegten Induktionsschleife durchgeführt wird.

## Claims

1. Process for detecting and evaluating the waveform (SV) of a signal with respect to time, in particular an output signal of a sensor, and for assigning this signal waveform to a specific physical process giving rise to this signal waveform,
**characterised in that** the signal is digitised in electrical form, compared to a threshold value (SW) and its waveform is recorded in areas in which its amplitude adopts a predetermined position above or below the threshold value (SW), that each of the recorded signal waveforms is subjected to a computing operation in which they are optimally approximated by a mathematical function designed to describe the signal waveform generated by the specific physical process, that during or following this the cross-correlation coefficient between the recorded signal waveform and the optimally approximated mathematical function is determined and compared to a predetermined cross-correlation setpoint characterising the physical process and the mathematical function designed to describe the signal waveform generated by this physical process, and that, provided the absolute value of the determined cross-correlation coefficient exceeds this setpoint, it is assumed that the specific physical process has taken place.

2. Process according to Claim 1, **characterised in that** the computing operation successively provides the approximation of several mathematical functions to a signal waveform, which are designed to describe signal waveforms generated by respective, different physical processes, and that the determination of the cross-correlation coefficient and its comparison with a characteristic cross-correlation setpoint for each of the mathematical functions is carried out and where the absolute value of a determined cross-correlation coefficient exceeds a cross-correlation setpoint, it is assumed that a physical process associated with the respective mathematical function optimally approximated to the signal waveform and with the cross-correlation setpoint that is characteristic of this mathematical function, has taken place.

3. Process according to Claim 1 or 2, **characterised in that** conic sections, in particular 2nd and 3rd order parabolas, are provided as mathematical functions for the approximation to a signal waveform.

4. Process according to Claim 1 or 2, **characterised in that** exponential functions, trigonometrical functions or other, at least in subdomains, continuous and single-valued functions are provided as mathematical functions.

5. Process according to one of the preceding Claims,
**characterised in that** in a further process step, the function that is optimally approximated to a physical process is evaluated with respect to the amplitude and position of its maximum or minimum, and with respect to its width or with respect to the position of predetermined values.

6. Process according to one of the preceding Claims,
**characterised in that** detection of wheel passages at an electromagnetic rail contact is carried out.

7. Process according to one of Claims 1 to 5,
**characterised in that** detection of road vehicles is carried out with the aid of an induction loop laid in the road surface.

## Revendications

1. Procédé pour détecter et évaluer la trace dans le temps (SV) d'un signal, en particulier d'un signal de sortie d'un détecteur, et pour affecter cette trace de signal à un certain processus physique provoquant cette trace de signal, caractérisé en ce que le signal sous forme électrique est numérisé, comparé à une valeur de seuil (SW) et sa trace est enregistrée dans des zones où son amplitude adopte une position prédéterminée au-dessus ou au-dessous de la valeur de seuil (SW), en ce que les traces de signal enregistrées sont respectivement soumises à une opération de calcul, dans laquelle elles sont approchées de façon optimale par une fonction mathématique adaptée pour la description de la trace de signal provoquée par le processus physique déterminé, en ce qu'à ce moment-là ou ultérieurement, le coefficient de corrélation croisée entre la trace de signal enregistrée et la fonction mathématique approchée de façon optimale est déterminé et comparé à une valeur de consigne de corrélation croisée prédéterminée et caractéristique du processus physique et de la fonction mathématique adaptée à la description de la trace de signal provoquée par celui-ci, et en ce qu'il est supposé que le processus physique déterminé ait eu lieu dans la mesure où le coefficient de corrélation croisée déterminé est d'une grandeur supérieure à cette valeur de consigne.

2. Procédé selon la revendication 1, caractérisé en ce que l'opération de calcul prévoit successivement l'approximation d'une trace de signal par plusieurs fonctions mathématiques, qui sont adaptées pour la description de traces de signal provoquées respectivement par différents processus physiques, et en ce que la détermination du coefficient de corrélation croisée et sa comparaison à une valeur de consigne de corrélation croisée caractéristique de chacune des fonctions mathématiques sont effectuées, et au cas où un coefficient de corrélation croisée déterminé serait d'une grandeur supérieure à une valeur de consigne de corrélation croisée, il est supposé qu'un processus physique affecté à la fonction mathématique approchant la trace de signal de façon optimale et à la valeur de consigne de corrélation croisée caractéristique de celle-ci ait eu lieu.

3. Procédé selon la revendication 1 ou 2, caractérisé en ce que des sections coniques, en particulier des paraboles de deuxième et troisième ordre, sont prévues comme fonctions mathématiques pour l'approximation d'une trace de signal.

4. Procédé selon la revendication 1 ou 2, caractérisé en ce que des fonctions exponentielles, des fonctions trigonométriques ou d'autres fonctions continues et univoques, au moins dans des sous-domaines, sont prévues comme fonctions mathématiques pour l'approximation d'une trace de signal.

5. Procédé selon l'une quelconque des revendications précédentes, caractérisé en ce que dans une étape de procédé supplémentaire, la fonction approchée d'un processus physique de façon optimale est évaluée quant à la hauteur et la position de sa valeur maximale ou minimale, quant à la largeur ou quant à la position de valeurs prédéterminées.

6. Procédé selon l'une quelconque des revendications précédentes, caractérisé en ce qu'une détection de passages de roue est effectuée au niveau d'un contact de rail électromagnétique.

7. Procédé selon l'une quelconque des revendications 1 à 5, caractérisé en ce qu'une détection de véhicules routiers est effectuée à l'aide d'une boucle à induction installée dans le revêtement de la chaussée.
